# EUROPEAN PATENT APPLICATION

(11) **EP 1 124 335 A1**
(43) Date of publication of application: **16.08.2001**
(21) Application number: 00102829.9
(22) Date of filing: 11.02.2000
(51) Int. Cl.: H04B 1/48, H04B 1/52

(54) **Radio station for transmitting and receiving signals**

(71) Applicant: SIEMENS AKTIENGESELLSCHAFT, 80333 München (DE)
(72) Inventor: Jensen, Niels Jorgen, 9490 Pandrup (DK); Faessler, Georg, 9440 Aabybro (DK)

(57) **Abstract**

The invention relates to a radio station for transmitting and receiving signals. A transmitting part of the radio station exhibits an impedance which is matched to an impedance of an antenna (7) at frequencies used for transmitting the signals. A receiving part of the radio station exhibits an impedance being matched to an impedance of the antenna (7) at frequencies used for receiving the signals. Switches (6, 8) are used for switching the transmitting or the receiving part to and off the antenna (7). The impedances are matched using matching networks (5, 9). These matching networks consist of passive elements and/or transistors. As passive elements discrete or distributed elements are employed.

## Description

### Prior art

The invention relates to a radio station for transmitting and receiving signals in accordance of a generic class of the independent patent claim.

Radio stations, especially mobile phones, exhibit a transmission (TX) and a receiving (RX) part. Most parts of the mobile phones circuitery are matched mainly to the characteristic impedance of fifty ohms. The antenna of the mobile phone which is used for receiving and transmitting signals covers the whole frequency band for transmitting and receiving signals, or it exhibits switches for matching the impedance at a certain frequency band to either the TX or RX part. Switches are then used to tune the frequency band of the antenna if the transmission and the reception of the signals are not performed in the same frequency band.

### Advantages of the invention

The radio station for transmitting and receiving signals having the characterizing features of the independent patent claim has the advantage of an increased bandwidth without switches for tuning. This means that the number of components needed for the mobile phone is reduced, so that the size of the mobile phone can be further reduced. Another advantage because of the reduced number of components is the reduced path loss. This leads to a reduced output power of the power amplifier, thereby reducing energy consumption and increasing battery life time.

The features of the dependent claims enable further improvements of the invention.

It is an advantage to use switches for switching either the transmitting or the receiving part to the antenna. This is an easy and simple method of connecting the receiving and transmitting part to the antenna.

In another embodiment of the invention for the transmitting part, the on and off state of the power amplifier are used for switching the transmitting part of the radio station to and off the antenna. This saves one switch. This leads also to a reduced size and a reduced path loss, so that less output power is required.

Furthermore, it is an advantage to use a matching network made of passive elements which are either distributed or discrete elements depending on the used frequencies for transmitting and receiving the signals.

### Drawing

Exemplary embodiments of the invention are showed in the figures and elucidated in detail in the description below. Figure 1 shows the radio station according to the invention, figure 2 shows a T-circuit, and figure 3 shows a Π-circuit.

### Description

Mobile phones which are used in a mobile communication systems the signals being received at different frequencies from the transmitted signals have only one antenna for both operations, the transmission and the reception. Since an antenna can be represented by an equivalent circuit with a complex impedance depending on the frequency, the antenna must be matched to both the receiving and the transmission part of the mobile phone. Otherwise undesirable power reflections occur between either the RX or the TX part and the antenna.

Matching means a maximum power transfer from one device to another device in microwave engineering. In microwave engineering, this means that an input impedance is matched to an output impedance by being the complex conjugate of the output impedance. If this is not feasible, it is the goal to reduce reflections as much as possible.

According to the invention, the different impedances of the antenna at the different frequencies for transmitting and receiving the signals are given and the impedance of TX part and the RX part are matched to the antenna impedances at those frequencies. The matching is achieved either by designing an appropriate output impedance of the RX and the TX part itself or by inserting a matching network between each the TX part, the RX part and the antenna.

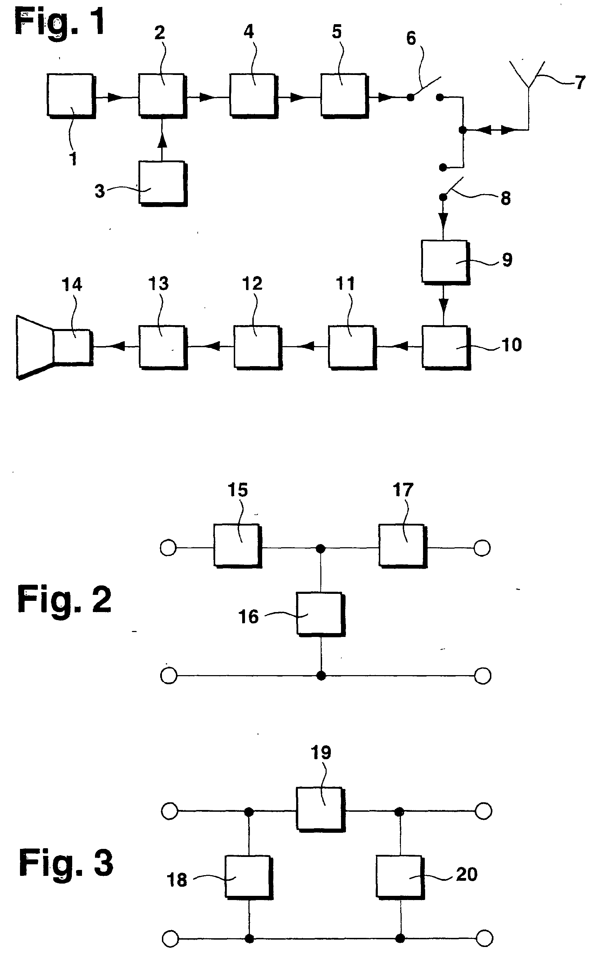

Figure 1 shows the radio station according to the invention. A data source 1 is connected to a first input of an up-converter 2. A local oscillator 3 is connected to a second input of the up-converter 2. An output of the up-converter 2 is connected to a power amplifier 4. An output of the power amplifier 4 is connected to an input of a matching network 5. An output of the matching network 5 is connected to a switch 6. At the other side the switch 6 is connected to an antenna 7 and to another switch 8. The switch 8 is connected at its other side to an input of a matching network 9. An output of the matching network 9 is connected to an input of a receiver 10 which down-converts the signal. The receiver 10 outputs signals to an analogue-digital converter 11. The analogue-digital converter 11 is connected to an input of a processor 12. The processor 12 outputs it signals to a signal processing unit 13. The signal processing unit 13 outputs its signals to a speaker 14 or any other appropriate data sink reproducing the signals.

The data source 1 is a microphone with attached electronics amplifying the signals from the microphone and processing them. The signals are then up-converted by the up-converter 2 using signals from the local oscillator 3. The local oscillator 3 generates sinusoidal signals at a given frequency. For up-conversion, a multiplication of the signals of the data source 1 and the sinusoidal signals of the local oscillator 3 is necessary. Alternatively, the data source represents devices such as a computer or control elements.

The up-converter 2 is therefore a device with a nonlinear current-voltage characteristic which leads to a multiplication of the signals of the data source 1 and the sinusoidal signals from the local oscillator 3. Devices with a nonlinear current-voltage characteristic are diodes and transistors. The up-converter 2 is designed in a way, so that a maximum amount of signal energy is transferred to the desired up-converted frequency. However, other frequencies also appear which must be suppressed by appropriate filters.

Generally the modulation is as follows, two sinusoidal radio frequency (RF) signals with a phase difference of 90 degrees are generated and the two data signals I (in-phase) and Q (quadratur-phase) are multiplied with these carriers. Afterwards, the two RF signals are added together. Presenting this in a complex plane (real axis to the right and imaginary axis to the top) shows the I signal on the real axis and the Q signal on the imaginary axis. The simplest modulation is a 1 and -1 at the I and Q outputs, which then gives four states of different phases (45,135,225 and 315). This is called 4PSK (4 state phase shift keying). The disadvantage is that the phase shift is done immediately when changing an I or Q signal. This would require infinite bandwidth, so that a more smooth transition is preferred. The modulation applied for GSM is GPSK (Gaussian Phase Shift Keying), which gives the highest throughput in bits for a given bandwidth.

The up-converted signal is then amplified by the power amplifier 4. The power amplifier 4 exhibits a conventional feedback loop for stabilising its operation which is not shown here. This feedback loop takes advantage of the output signal of the power amplifier 4 and sets according to the output power of the power amplifier 4 the gain factor of the power amplifier 4. Thus, it is self-stabilising. The power amplifier 4 signals are then transferred from the power amplifier 4 to the matching network 5.

The matching network 5 transforms the impedance of the power amplifier 4 to be the complex conjugate of the input impedance of the antenna 7. This is necessary for a maximum power transfer. After the matching network 5 a switch 6 connects the transmission part, comprising the elements with the reference numbers 1 to 5, to the antenna 7. The switch 6 is a PIN Diode or a FET (Field Effect Transistor) operated by a processor which detects when signals are to be transmitted. The switch 6 is open when no signals are to be transmitted. Therefore, the radio station is always in a reception mode when not transmitting signals.

When signals are received by the antenna 7, then the switch 8 is closed, so that the received signals propagate to the matching network 9 which matches the output impedance of the antenna 7 at the frequencies for receiving signals to the input impedance of the receiving part of the mobile phone, this is the radio station.

The reception part of the mobile phone consists of the components with the reference numbers 9 to 14. After the matching network 9 the signals are then processed by a receiver 10. The receiver 10 down-converts and amplifies the signals. Then, the signals are transferred to an analogue-digital converter 11. The analogue-digital converter 11 transforms the received and amplified signals into digital signals. The digital signals are then inputted to a processor 12. The processor 12 performs error correction and decoding on the signals. A bit stream of the decoded signals is then transferred to the signal processing unit 13 which prepares the bit stream for the speaker 14. The signals are therefore amplified and converted from digital signals into analogue signals. The speaker 14 reproduces finally the signals.

The matching networks 5 and 9 consist of passive elements. For arranging passive elements two basic circuits are used. In Figure 2, the so called T-circuit is displayed. An impedance 15 is connected to the impedance 16 and 17. The impedance 16 is connected to mass. The circuit looks like a capital T which is the reason for its designation.

The alternative circuit is the Π-circuit shown in Figure 3. An impedance 18 is connected to the impedance 19 and at its other side to mass. The impedance 19 is connected at its other side to the impedance 20. Other passive networks are also possible.

Instead of the switch 6 the output impedance of the power amplifier 4 can be used for switching the transmission part of the radio station to and off the antenna 7. If the power amplifier 4 is switched off, its output impedance is pure imaginary, so that signal power is reflected back from the power amplifier.

As passive elements either discrete elements or distributed elements are employed. Discrete elements are conventional passive elements such as resistors, capacitors and inductors being available from many suppliers. Distributed elements, however, are realised using transmission lines and are commonly employed in the microwave regime.

## Claims

1. Radio station for transmitting and receiving signals, the radio station exhibiting a transmitting part, a receiving part and one antenna (7) for transmitting and receiving signals, the radio station using separate frequency bands for receiving and transmitting the signals, characterized in that the transmitting part exhibits an impedance being matched to an impedance of the antenna (7) at frequencies used for transmitting the signals and that the receiving part exhibits an impedance being matched to an impedance of the antenna (7) at frequencies used for receiving the signals.

2. Radio station according to claim 1 characterized in that at least one switch (6, 8) is used for switching either the transmitting or the receiving part to the antenna (7).

3. Radio station according to claim 1 or 2 characterized in that the impedance of the transmitting part in on and off state of the power amplifier (4) is used for switching the transmitting part to and off the antenna (7).

4. Radio station according to claim 2 or 3 characterized in that the receiving part and/or the transmitting part exhibit each a matching network (5, 9) for matching their impedances to the impedances of the antenna (7) at frequencies for receiving and/or transmitting the signals.

5. Radio station according to claim 4 characterized in that the matching network (5, 9) exhibits passive elements.

6. Radio station according to claim 5 characterized in that the passive elements are discrete elements.

7. Radio station according to claim 5 characterized in that the passive elements are distributed elements.
